# EUROPÄISCHE PATENTSCHRIFT

(11) **EP 4 053 234 B1**
(45) Veröffentlichungstag und Bekanntmachung des Hinweises auf die Patenterteilung: **18.09.2024**
(21) Anmeldenummer: 21161079.5
(22) Anmeldetag: 05.03.2021
(51) Int. Cl.: C09J 7/21, B26D 1/03, B23K 26/08, B23K 26/38, B23K 26/082

(54) **VERFAHREN UND VORRICHTUNG ZUR HERSTELLUNG EINES KLEBEBANDES**
METHOD AND DEVICE FOR PRODUCING AN ADHESIVE STRIP
PROCÉDÉ ET DISPOSITIF DE FABRICATION D'UNE BANDE ADHÉSIVE

(43) Veröffentlichungstag der Anmeldung: 07.09.2022
(73) Patentinhaber: Certoplast Technische Klebebänder GmbH, 42285 Wuppertal (DE)
(72) Erfinder: RAMBUSCH, Peter, 42115 Wuppertal (DE); RAMBUSCH, René, 42113 Wuppertal (DE); RUHNAU, Kay, 42855 Remscheid (DE); LEERMANN, Timo, 42369 Wuppertal (DE)
(74) Vertreter: Andrejewski - Honke Patent- und Rechtsanwälte Partnerschaft mbB

(56) Entgegenhaltungen:
- WO-A1-2017/207225
- DE-T2- 69 401 269
- ANONYMOUS: "Quer", DUDEN.DE, 1 January 2017 (2017-01-01), pages 1 - 2, XP055458462, Retrieved from the Internet <URL:www.duden.de/rechtschreibung/quer> [retrieved on 20180312]
- ANONYMOUS: "BrixX HUB High-power laser combiner with up to 6 wavelengths", 1 January 2019 (2019-01-01), pages 1 - 2, XP093097357, Retrieved from the Internet <URL:https://www.omicron-laser.de/files/brixxhub_datasheet201901.pdf> [retrieved on 20231102]

## Beschreibung

Die Erfindung betrifft ein Verfahren und eine zugehörige Vorrichtung zur Herstellung eines Klebebandes, wonach ein bandförmiger sowie mit einer Klebebeschichtung ausgerüsteter textiler Träger ausgehend von einer Vorratseinheit zugeführt wird, wonach ferner der bandförmige Träger mithilfe einer Lasereinheit in Längsrichtung zu den einzelnen Klebebändern geschnitten wird, und wonach mehrere Lasereinheiten vorgesehen sind, die in einzelnen Längssegmenten des bandförmigen Trägers die jeweiligen Klebebänder erzeugen.

Typischerweise erfolgt die Herstellung von Klebebändern derart, dass der bandförmige sowie mit der Klebebeschichtung ausgerüstete textile Träger von der Vorratseinheit einer Schneideinrichtung zugeführt wird. Die Schneideinrichtung ist beispielsweise mit rotierenden Messern ausgerüstet, so dass auf diese Weise der bandförmige Träger in die einzelnen Klebebänder geschnitten wird, die dann für sich genommen aufgerollt und weiter konfektioniert werden. Eine solche Vorgehensweise wird unter anderem und ganz generell im Stand der Technik nach der WO 2017/009049 A1 vorgestellt.

Daneben wird im Stand der Technik aber auch grundsätzlich schon so vorgegangen, dass das Schneiden der einzelnen Klebebänder aus dem bandförmigen textilen Träger mithilfe einer Ultraschalleinheit und/oder einer Lasereinheit vorgenommen werden kann, wie dies die vorerwähnte und gattungsbildende Veröffentlichung generell beschreibt. Dabei ist eine Lasereinheit mit dem grundsätzlichen Vorteil ausgerüstet, dass beispielsweise bei einem Wechsel des zu konfektionierenden Klebebandes bzw. einer Änderung seiner Breite keine aufwendigen Einstellmaßnahmen erforderlich sind, wie dies bei rotierenden Messern notwendig ist. Denn hier sind entsprechende mechanische Verstellungen unabdingbar, wohingegen bei einer Lasereinheit die Einstellung ohne mechanischen Eingriff verändert werden kann.

Im Rahmen des ebenfalls einschlägigen Standes der Technik nach der US 2007/0234862 A1wird so vorgegangen, dass mithilfe eines Lasers nicht nur Schnittkanten in Längsrichtung erzeugt werden, sondern sich grundsätzlich beliebige Schnittmuster darstellen lassen. Dazu ist der Laser an eine X-/Y-Verstelleinheit in der Art eines Plotters angeschlossen.

Beim gattungsbildenden Stand der Technik nach der WO 2017/207225 A1 geht es um ein Verfahren zur Herstellung eines Klebebandes, bei dem ein textiles Trägermaterial in einzelne Klebebänder mithilfe einer Trenneinrichtung geschnitten wird. Die Trenneinrichtung arbeitet drucklos. Hierbei kann es sich um eine Ultraschallschneideinrichtung oder auch eine Laserstrahlschneideinrichtung oder auch eine Wasserstrahlschneideinrichtung handeln.

Ferner befasst sich der weitere Stand der Technik nach der DE 694 01 269 T2 mit einem Schneidlaser zum Schneiden von insbesondere textilem Material. Dazu sind ein Laser und ein Kollimator vorgesehen, die in einem festen Rahmen montiert sind, um einen statischen Laserstrahl zu erzeugen. Außerdem ist ein Führungskopf vorgesehen, um den Laserstrahl auf das zu bearbeitende Material abzulenken. Mithilfe einer festen Schiene kann der Führungskopf in zwei Richtungen hin- und her bewegt werden. Das ist insgesamt relativ zeitaufwendig.

Schließlich beschäftigt sich der Stand der Technik "BrixX HUB High-power laser combiner with up to 6 wavelenghts" vom 1. Januar 2019 mit der grundsätzlichen Möglichkeit, über eine zentrale Steuereinheit bis zu sechs Laser unterschiedlicher Wellenlänge ansteuern zu können.

Der Stand der Technik hat sich grundsätzlich bewährt, stößt jedoch dann an Grenzen, wenn eine Vielzahl an Klebebändern aus einem bandförmigen textilen Träger hergestellt werden soll. Außerdem lassen sich bisher keine ausreichenden Produktionsgeschwindigkeiten in der Praxis darstellen, um preislich wettbewerbsfähige Klebebänder mit dieser Technik realisieren zu können. Hier setzt die Erfindung ein.

Der Erfindung liegt das technische Problem zugrunde, ein Verfahren und eine Vorrichtung zur Herstellung von Klebebändern der eingangs beschriebenen Ausprägung so weiterzuentwickeln, dass insgesamt die Produktionsgeschwindigkeit gegenüber bisherigen Vorgehensweisen erhöht ist und dadurch wettbewerbsfähige Produkte zur Verfügung stehen.

Zur Lösung dieser technischen Problemstellung ist ein gattungsgemäßes Verfahren im Rahmen der Erfindung dadurch gekennzeichnet, dass eine zentrale Steuereinheit eingesetzt wird, um sämtliche Lasereinheiten hiermit gemeinsam derart ansteuern zu können, dass in jedem Längssegment mehrere Klebebänder mithilfe der zugehörigen Lasereinheit geschnitten werden und dazu die jeweilige Lasereinheit mit einer Laserquelle sowie einer Strahlablenkeinheit ausgerüstet ist, wobei die Strahlablenkeinheit den von der Lasereinheit ausgehenden Laserstrahl zur Erzeugung der einzelnen Klebebänder im zugehörigen Längssegment jeweils in Längsrichtung zur Realisierung mehrerer Schnittkanten vorgegebener Länge ablenkt, wobei ferner die Geschwindigkeit des bandförmigen Trägers und diejenige der Strahlablenkeinheit aneinander angepasst sind und dem von der Vorratseinheit zugeführten bandförmigen Träger ein Sensor zur Geschwindigkeitsmessung zugeordnet ist, um die Geschwindigkeit des bandförmigen Trägers zu erfassen, und wobei ein Geschwindigkeitssignal des Sensors von der zentralen Steuereinheit verarbeitet und mit der Geschwindigkeit zum Ansteuern der Strahlablenkeinheit synchronisiert wird.

Die Erfindung greift also zunächst einmal und ausdrücklich nicht auf eine (einzige) Lasereinheit zurück, wie dies der Stand der Technik in diesem Kontext lehrt und vorgibt. Vielmehr kommen mehrere Lasereinheiten zum Einsatz, das heißt zwei oder mehr Lasereinheiten. Dadurch kann grundsätzlich die Produktionsgeschwindigkeit erhöht werden. Das alles gelingt überraschenderweise auch vor dem Hintergrund, dass Lasereinheiten typischerweise kostenintensiv sind.

Die Erfindung hat jedoch erkannt, dass der Rückgriff auf zwei oder mehr Lasereinheiten bei entsprechend breitem bandförmigen Träger die Möglichkeit eröffnet, eine Vielzahl an Klebebändern mithilfe der mehreren Lasereinheiten gleichzeitig und parallel schneiden zu können. Durch diese erhöhte Produktionsgeschwindigkeit werden die anfänglich hohen Investitionskosten kompensiert, was so generell nicht zu erwarten war.

Die gewählte Vorgehensweise der Erfindung ist dabei nach wie vor mit dem Vorteil ausgerüstet, dass mithilfe der jeweiligen Lasereinheit insbesondere die Breite des auf diese Weise erzeugten Klebebandes einfach und schnell variiert werden kann. Dazu ist es in der Regel lediglich erforderlich, eine entsprechende und den jeweiligen Längsschnitt erzeugende Strahlablenkeinheit anders anzusteuern. Das geschieht meistens mithilfe einer programmierbaren Steuereinheit. Auf diese Weise besteht sogar die Möglichkeit, aus dem bandförmigen Träger Klebebänder mit unterschiedlicher Breite in einem Zug und in der Maschinenlängsrichtung schneiden zu können. Dadurch ist das erfindungsgemäße Verfahren nicht nur durch eine gegenüber dem Stand der Technik erhöhte Produktionsgeschwindigkeit gekennzeichnet, sondern lassen sich bedarfsweise Klebebänder praktisch beliebiger Breite gleichzeitig realisieren, die an den jeweiligen Bedarf optimal angepasst werden können. Es wird also eine besondere Flexibilität im Hinblick auf die erzeugten jeweiligen Mengen zur Verfügung gestellt.

Dabei versteht es sich, dass grundsätzlich sogar im jeweiligen Längssegment Klebebänder unterschiedlicher Breite produziert werden können. Daneben ist es auch denkbar, im jeweiligen Längssegment Klebebänder gleicher Breite herzustellen, wobei von Längssegment zu Längssegment mit unterschiedlicher Breite der erzeugten Klebebänder gearbeitet wird. Das Längssegment wird dabei von der zugehörigen Lasereinheit abgedeckt und korrespondiert zu einem Streifen des bandförmigen Trägers in Längsrichtung vorgegebener Breite.

Dabei wird meistens so vorgegangen, dass die einzelnen Längssegmente abstandsfrei aneinander anschließen. Grundsätzlich können die einzelnen der jeweiligen Lasereinheit zugeordneten Längssegmente aber auch beabstandet zueinander in der Längsrichtung bzw. Maschinenrichtung des bandförmigen Trägers verlaufen. Sofern die Längssegmente abstandsfrei aneinander anschließen, erstrecken sie sich in der Regel über die gesamte Breite des bandförmigen Trägers und decken diesen praktisch vollständig ab.

Außerdem wird erfindungsgemäß so vorgegangen, dass in jedem Längssegment mehrere Klebebänder mithilfe der zugehörigen Lasereinheit geschnitten werden. Beispielsweise ist es denkbar, dass mit der zugehörigen Lasereinheit beispielsweise drei bis zehn Klebebänder in dem korrespondierenden Längssegment erzeugt werden. Wenn an dieser Stelle dann noch und beispielhaft drei Lasereinheiten zum Einsatz kommen, können auf diese Weise und zugleich 30 Klebebänder parallel produziert werden. Das gilt selbstverständlich nur beispielhaft und hängt auch davon ab, wie breit der von der Vorratseinheit zugeführte bandförmige Träger ausgelegt ist. Meistens geht man hier von einer Rollenbreite (bezogen auf die Mutterrolle) aus, die im Minimum 350 mm beträgt.

Wie bereits erläutert, werden die Klebebänder im Allgemeinen im jeweiligen und zur Lasereinheit gehörigen Längssegment mit übereinstimmender Breite geschnitten. Selbstverständlich kann im betreffenden Längssegment auch mit voneinander abweichender Breite gearbeitet werden. Ebenso liegt es im Rahmen der Erfindung, Klebebänder mit jeweils übereinstimmender Breite im jeweiligen Längssegment zu erzeugen und die Breite von Längssegment zu Längssegment zu variieren. Außerdem wird meistens so vorgegangen, dass der bandförmige Träger in Querrichtung in die Längssegmente jeweils gleicher Breite unterteilt wird. Genauso gut kann natürlich auch mit Längssegmenten unterschiedlicher Breite in der Querrichtung gearbeitet werden.

Auf diese Weise wird jeweils eine Vielzahl an Klebebändern aus dem bandförmigen Träger durch die beschriebenen Längsschnitte erzeugt. Die einzelnen Klebebänder können anschließend zu Klebebandrollen konfektioniert werden. Dabei ist es generell denkbar, dass der bandförmige textile Träger von vornherein mit der Klebebeschichtung ausgerüstet ist. Dazu mag die Klebebeschichtung vollflächig auf den textilen Träger aufgebracht sein. Grundsätzlich ist natürlich auch eine Streifenbeschichtung möglich.

Darüber hinaus liegt es im Rahmen der Erfindung, den unbeschichteten bandförmigen textilen Träger zu den einzelnen Klebebändern mithilfe der Lasereinheit zu schneiden und erst im Anschluss daran die einzelnen Klebebänder mit der Klebebeschichtung auszurüsten. Das kann vollflächig geschehen. Im Allgemeinen wird man bei einer solchen Vorgehensweise jedoch so arbeiten, dass auf die mithilfe der Lasereinheit geschnittenen einzelnen Klebebänder eine Streifenbeschichtung des Klebemittels aufgetragen wird. In diesem Zusammenhang hat es sich bewährt, wenn als Klebemittel ein Hotmeltkleber bzw. Schmelzhaftkleber auf Acrylatbasis zum Einsatz kommen. Dabei mag die Beschichtung mit einer entsprechend schmal ausgerüsteten Düse als Streifenbeschichtung auf das betreffende Klebeband aufgebracht werden. Grundsätzlich kann auch mit einer Maske gearbeitet werden, um den Schmelzhaftkleber als Streifen auf das zuvor geschnittene Klebeband aufzubringen.

Für den textilen Träger sind grundsätzlich jedwede Textilien geeignet, so beispielsweise Vliese, Gewebe, Gewirke oder auch Mischformen. Meistens wird an dieser Stelle mit einem Gewebeträger gearbeitet. Denkbar sind hier beispielsweise PA (Polyamid)-Gewebe, PET (Polyethylentheraphthalat)-Gewebe usw. Der textile Träger greift dabei typischerweise auf Kunststofffasern zurück. Auf diese Weise werden jeweils fusselfreie Schnittkanten erzeugt. Denn beim Schneidprozess mithilfe der Lasereinheit kommt es - zumindest temporär - dazu, dass die Kunststofffasern im Bereich der Schnittkante eingeschmolzen werden und so saubere und fusselfreie Schnittkanten erzeugt werden.

Das gilt insbesondere für den Fall, dass mit einer Lasereinheit gearbeitet wird, die im Infraroten emittiert. Tatsächlich haben sich an dieser Stelle insbesondere CO₂-Laser als günstig erwiesen, die typischerweise bei ca. 10,6 µm Wellenlänge emittieren. Eine solche Wellenlänge wird besonders gut von den meistens schwarzen textilen Trägern absorbiert und in Wärme umgesetzt, so dass es im Bereich der Schnittkanten zum zumindest teilweisen Verdampfen des Materials und einem Verschmelzen kommt. Die Leistung der treffenden Lasereinheit kann dabei grundsätzlich und nur beispielhaft bis zu 1 kW oder bis zu 2 kW oder noch mehr betragen. Außerdem kann die Lasereinheit kontinuierlich oder gepulst betrieben werden.

Erfindungsgemäß ist die Lasereinheit mit der Laserquelle sowie der Strahlablenkeinheit ausgerüstet. Außerdem ist zusätzlich noch die Steuereinheit realisiert. Da erfindungsgemäß mit mehreren Lasereinheiten gearbeitet wird, wird die zentrale Steuereinheit eingesetzt, um die sämtlichen Lasereinheiten hiermit gemeinsam ansteuern zu können. Die jeweilige Strahlablenkeinheit sorgt ihrerseits dafür, dass der von der Lasereinheit ausgehende Laserstrahl zur Erzeugung der einzelnen Klebebänder im zugehörigen Längssegment jeweils in Längsrichtung abgelenkt wird, und zwar zur Realisierung mehrerer Schnittkanten vorgegebener Länge. Dabei wird regelmäßig so vorgegangen, dass die Strahlablenkeinheit jeweils parallele Schnittkanten gleicher Länge im Längssegment erzeugt. Das heißt, das Längssegment kann in einzelne Abschnitte unterteilt werden. Der einzelne Abschnitt ist dabei durch die parallelen Schnittkanten gleicher Länge charakterisiert. In diesem Zusammenhang wird dann meistens so vorgegangen, dass die Anzahl der Schnittkanten im betreffenden Abschnitt der Anzahl der Klebebänder im Längssegment entspricht.

Um nun Klebebänder unterschiedlicher Länge erzeugen zu können, sorgt die Strahlablenkeinheit dafür, dass im jeweiligen Längssegment die parallelen Schnittkanten vorgegebener Länge jeweils in Maschinenrichtung aneinander anschließen. Das heißt, mithilfe der Strahlablenkeinheit wird zunächst ein Abschnitt im Längssegment erzeugt. Im betreffenden Abschnitt sind die parallelen Schnittkanten vorgegebener Länge realisiert. Bei dieser Länge mag es sich um beispielsweise 50 mm oder 100 mm oder noch mehr handeln.

Da Klebebänder in der Regel über eine Länge von mehreren Metern verfügen, sorgt nun die Strahlablenkeinheit dafür, dass die einzelnen Abschnitte aneinander anschließen. Zu diesem Zweck werden die parallelen Schnittkanten vorgegebener Länge jeweils in Maschinenrichtung aneinander anschließend mithilfe der Strahlablenkeinheit erzeugt. Das geschieht generell derart, dass die parallelen Schnittkanten versatzfrei aneinander anschließen. Es ist grundsätzlich aber auch möglich, dass die parallelen Schnittkanten mit Versatz aneinander anschließen. So wird man beispielsweise dann vorgehen, wenn am Ende des zu erzeugenden Klebebandes auf ein Klebeband anderer Breite umgestellt werden soll.

Außerdem wird erfindungsgemäß so vorgegangen, dass die Geschwindigkeit des bandförmigen Trägers und diejenige der Strahlablenkeinheit aneinander angepasst sind. Um die Geschwindigkeit des bandförmigen Trägers zu erfassen, wird dem von der Vorratseinheit zugeführten bandförmigen Träger ein Sensor zur Geschwindigkeitsmessung zugeordnet werden. Bei diesem Sensor zur Geschwindigkeitsmessung mag es sich um eine Friktionsrolle handeln, also eine an die Oberfläche des bandförmigen Trägers angelegte Rolle, die durch die Bewegung des bandförmigen Trägers in Maschinenrichtung in Rotationen versetzt wird. Die Rotationen der Rolle korrespondieren zu dem Geschwindigkeitssignal, welches von der zentralen Steuereinheit verarbeitet und mit der Geschwindigkeit zur Ansteuerung der Strahlablenkeinheit synchronisiert wird.

Es ist alternativ oder zusätzlich aber auch denkbar, dass der bandförmige Träger über beispielsweise in regelmäßigen Abständen vorhandene Markierungen verfügt, die mithilfe des Sensors zur Geschwindigkeitsmessung erfasst und zu einem entsprechenden Geschwindigkeitssignal beim Durchlauf des bandförmigen Trägers in der Maschinenrichtung korrespondieren. Auch in diesem Fall wird das Signal des Sensors von der zentralen Steuereinheit verarbeitet und mit der Geschwindigkeit zur Ansteuerung der Strahlablenkeinheit synchronisiert.

Die Synchronisation der Geschwindigkeit des bandförmigen Trägers einerseits mit der Strahlablenkeinheit andererseits wird seitens der zentralen Steuereinheit so vorgenommen, dass die Strahlablenkeinheit beispielsweise der Geschwindigkeit des bandförmigen Trägers in der Maschinenrichtung folgen kann. Diese Geschwindigkeit mag mehrere 10 m/min betragen, beispielsweise bis zu 60 m/min oder noch mehr. Jedenfalls ist es erforderlich, dass bei beispielsweise einer Geschwindigkeit des bandförmigen Trägers in der Maschinenrichtung von 50 m/min auch die Strahlablenkeinheit so schnell angesteuert wird oder werden kann, dass im Beispielfall die zehn Schnittkanten im zugehörigen Längssegment auch jeweils von Abschnitt zu Abschnitt erzeugt werden können. Das setzt voraus, dass jede einzelne Schnittkante von der Ablenkeinheit mit zumindest der zehnfachen Geschwindigkeit im Vergleich zur Geschwindigkeit des bandförmige Trägers produziert wird, weil die Strahlablenkeinheit dafür sorgt, dass der Laserstrahl innerhalb des Längssegmentes von Schnittkante zu Schnittkante springt.

Zu diesem Zweck ist die Strahlablenkeinheit in der Regel mit wenigstens zwei Umlenkspiegeln ausgerüstet, die in zwei zueinander senkrecht stehenden Ebenen verschwenkbar sind. Außerdem wird zum Verschwenken des betreffenden Umlenkspiegels in der Regel ein sogenannter Galvanometer-Scanner eingesetzt. Als Folge hiervon ist die Strahlablenkeinheit typischerweise als dreiachsiger Galvanometer-Scanner ausgebildet, ermöglicht also Schnitte insbesondere in der Ebene und in praktisch beliebiger Längs- und Querrichtung. Die Längsrichtung fällt dabei mit der Maschinenrichtung zusammen, während die Querrichtung hierzu quer verläuft. - Gegenstand der Erfindung ist auch eine zugehörige Vorrichtung, wie sie im Anspruch 12 ff. beschrieben wird.

Nachfolgend wird die Erfindung anhand einer lediglich ein Ausführungsbeispiel darstellenden Zeichnung näher erläutert; es zeigen:

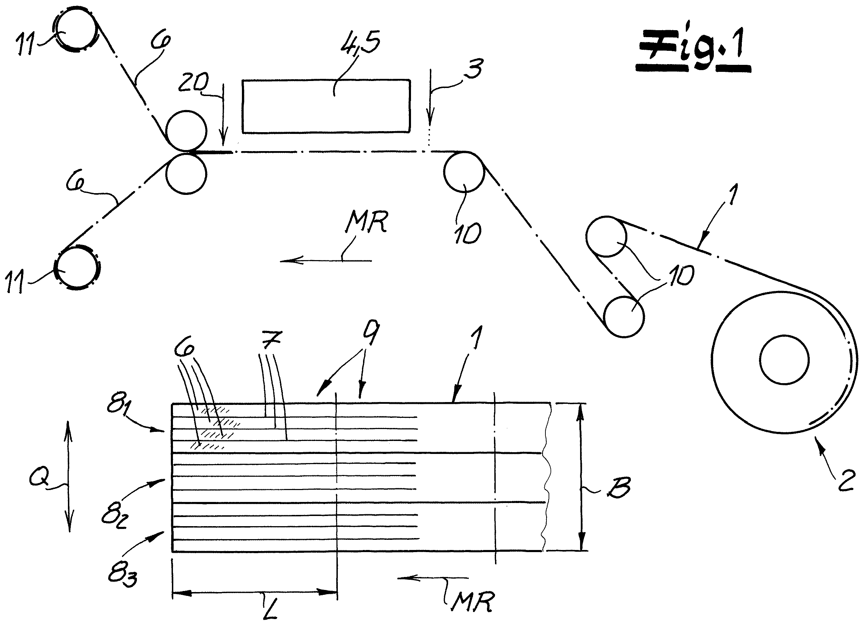

- Fig. 1: die erfindungsgemäße Vorrichtung zur Herstellung eines Klebebandes in einer schematischen Übersicht zusammen mit einer prinzipiellen Aufsicht auf den bandförmigen Träger,
- Fig. 2: die Vorrichtung perspektivisch in vergrößerter Ansicht,
- Fig. 3: einen Ausschnitt aus der Fig. 2 im Bereich der Lasereinheit und
- Fig. 4: die Strahlablenkeinheit schematisch und im Detail.

In den Figuren ist eine Vorrichtung zur Herstellung eines Klebebandes dargestellt. Zu diesem Zweck erkennt man zunächst einmal einen bandförmigen Träger 1 der von einer Vorratseinheit 2 ausgehend in einer Maschinenrichtung MR zugeführt wird, welche mit der Längsrichtung des bandförmigen Trägers 1 zusammenfällt. Bei dem bandförmigen Träger 1 handelt es sich um einen bandförmigen textilen Träger 1 und konkret um ein Gewebe, beispielsweise PA-Gewebe. Dieses ist mit einer einseitigen Klebebeschichtung 3 vollflächig ausgerüstet.

Der solchermaßen vorkonfektionierte bandförmige textile Träger 1 wird nun in der Maschinenrichtung MR mithilfe einer Lasereinheit 4, 5 in der Längsrichtung bzw. Maschinenrichtung MR zu einzelnen streifenförmigen Klebebändern 6 geschnitten, die man ausgangsseitig erkennt. Dazu werden jeweils mithilfe der Lasereinheit 4, 5 in den bandförmigen Träger Schnittkanten 7 in der Längsrichtung bzw. Maschinenrichtung MR eingebracht, wie man anhand der Aufsicht auf den bandförmigen Träger 1 nachvollziehen kann.

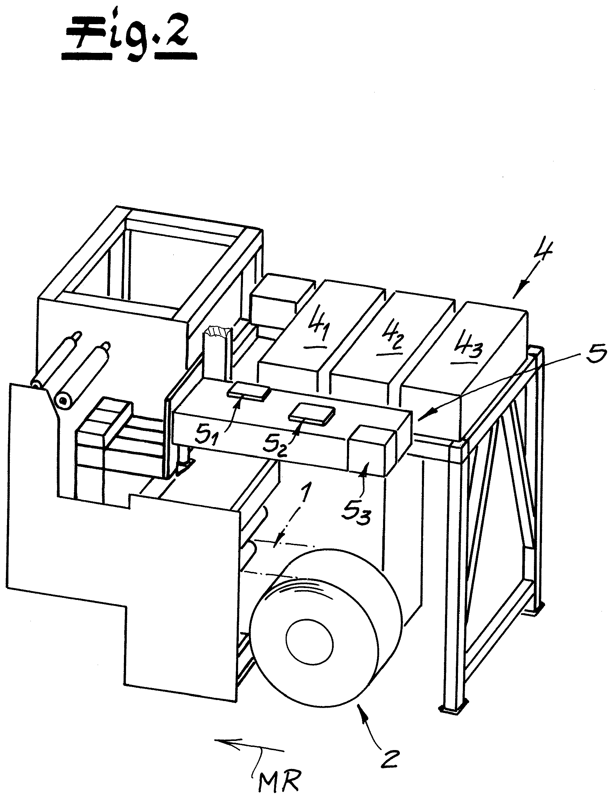

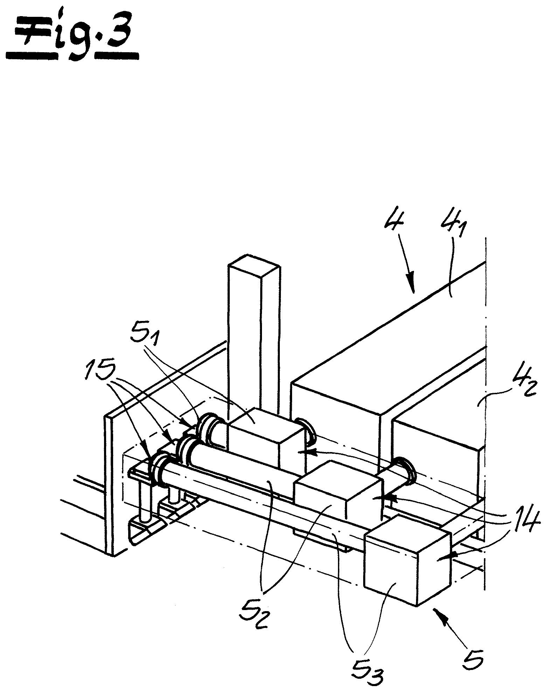

Erfindungsgemäß sind nun mehrere Lasereinheiten 4, 5 realisiert. Zur Unterscheidung der einzelnen Lasereinheiten 4, 5 sind diese jeweils mit einem Index im Sinne von 4₁, 5₁; 4₂ und 5₂ und schließlich 4₃, 5₃ gekennzeichnet und können so voneinander unterschieden werden. Das erkennt man anhand der Figuren 2 und 3. Diese mehreren Lasereinheiten 4, 5 bzw. 4₁, 5₁; 4₂, 5₂ und 4₃, 5₃ sorgen nun dafür, dass der bandförmige textile Träger 1 in zugehörigen Längssegmenten 8₁, 8₂ und 8₃ bearbeitet und mit den zuvor bereits angesprochenen Schnittkanten 7 ausgerüstet wird. Dabei ist die Auslegung insgesamt so getroffen, dass die Lasereinheit 4₁, 5₁ für die Bearbeitung des Längssegmentes 8₁ sorgt. Die Lasereinheit 4₂, 5₂ gehört zum Längssegment 8₂ und die Lasereinheit 4₃, 5₃ nimmt die Bearbeitung des Längssegmentes 8₃ vor.

Die Längssegmente 8₁, 8₂ und 8₃ erstrecken sich jeweils als Streifen in Längsrichtung des bandförmigen textilen Trägers 1 das heißt in der Maschinenrichtung MR. Außerdem erkennt man, dass die einzelnen Längssegmente 8₁, 8₂ und 8₃ in der fraglichen Längsrichtung bzw. Maschinenrichtung MR in Abschnitte 9 unterteilt sind.

Die einzelnen Längssegmente 8₁, 8₂ und 8₃ schließen jeweils abstandsfrei aneinander an und erstrecken sich zusammengenommen über die gesamte Breite B des bandförmigen Trägers 1. Diese Breite B des bandförmigen Trägers 1 kann mehrere Zentimeter bis zu 1 m oder noch mehr betragen. Tatsächlich wird der bandförmige Träger 1 auf der als Wickeltrommel ausgebildeten Vorratseinheit 2 aufgenommen und über einzelne Umlenkrollen 10 schließlich der Lasereinheit 4, 5 bzw. den mehreren Lasereinheiten 4₁, 5₁; 4₂, 5₂ und 4₃, 5₃ zugeführt. Nachdem mithilfe der Lasereinheiten 4₁, 5₁; 4₂, 5₂ und 4₃, 5₃ die einzelnen Längsschnitte bzw. Schnittkanten 7 in den bandförmigen Träger 1 eingebracht worden sind, werden die auf diese Weise erzeugten streifenförmigen Klebebänder 6 beispielhaft aufgeteilt und mithilfe von Aufnahmerollen 11 aufgewickelt und beispielsweise zu spiralförmigen Klebebandrollen konfektioniert.

Zuvor werden nun in jedem der drei dargestellten Längssegmente 8₁, 8₂ und 8₃ mehrere Klebebänder 6 mithilfe der zugehörigen Lasereinheit 4₁, 5₁; 4₂, 5₂ und schließlich 4₃, 5₃ geschnitten. Nach dem Ausführungsbeispiel sorgt die Lasereinheit 4₁, 5₁ dafür, dass im zugehörigen Längssegment 8₁ drei Schnittkanten 7 erzeugt werden, so dass auf diese Weise und ausgangsseitig insgesamt vier streifenförmige Klebebänder 6 aus dem betreffenden Längssegment 8₁ des bandförmigen Trägers 1 entstehen. Bei den übrigen Längssegmenten 8₂ und 8₃ kann vergleichbar vorgegangen werden. Es ist aber auch möglich, dass mithilfe der Lasereinheit 4₂, 5₂ im zugehörigen Längssegment 8₂ eine unterschiedliche Anzahl an Schnittkanten 7 produziert wird, so dass hieraus auch eine im Vergleich zum Längssegment 8₁ abweichende Anzahl an Klebebändern 6 ausgangsseitig resultiert. Das ist im Detail jedoch nicht dargestellt. Das heißt, die Klebebänder 6 werden im jeweiligen Längssegment 8₁, 8₂ und 8₃ mit jeweils übereinstimmender Breite geschnitten. Außerdem ist die Auslegung so getroffen, dass der bandförmige Träger 1 in Querrichtung Q, also senkrecht zur Maschinenrichtung bzw. Längsrichtung MR, in die Längssegmente 8₁, 8₂ und 8₃ jeweils gleicher Breite unterteilt ist.

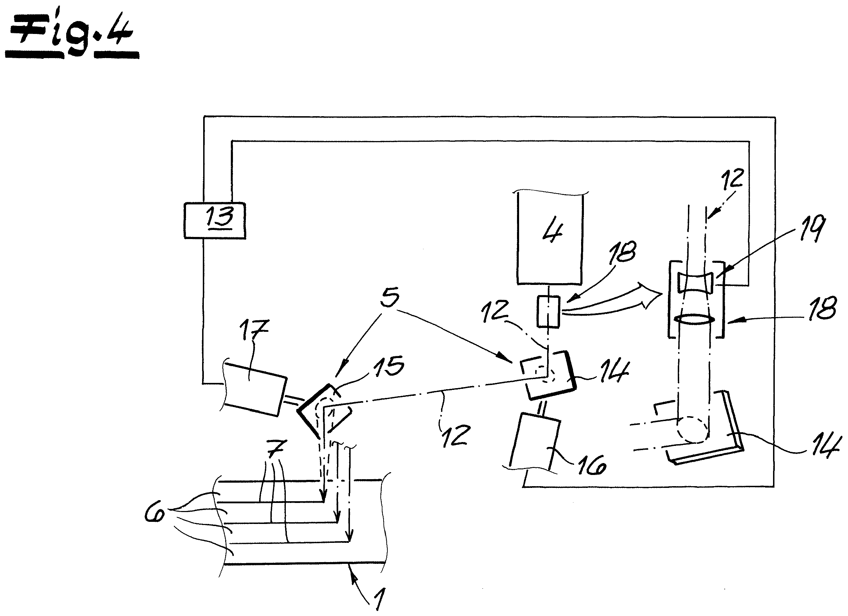

Anhand der Figuren 2 und 3 erkennt man, dass die Lasereinheit 4₁, 5₁; 4₂, 5₂ und 4₃, 5₃ jeweils mit einer Laserquelle 4₁, 4₂, 4₃ sowie einer zugehörigen Strahlablenkeinheit 5₁, 5₂, 5₃ ausgerüstet ist. Die Laserquelle 4₁, 4₂, 4₃ ist dabei jeweils quer zur Maschinenrichtung MR orientiert. Mithilfe der Strahlablenkeinheit 5₁, 5₂, 5₃ wird der von der Lasereinheit 4 ausgehende und insbesondere in der Figur 4 zu erkennende Laserstrahl 12 zur Erzeugung der einzelnen streifenförmigen Klebebänder 6 im zugehörigen Längssegment 8₁, 8₂, 8₃ jeweils in Längsrichtung abgelenkt, um die einzelnen Schnittkanten 7 vorgegebener Länge L zu produzieren. Tatsächlich ist die Auslegung so getroffen, dass mithilfe der Strahlablenkeinheit 5 bzw. 5₁, 5₂, 5₃ im zugehörigen Längssegment 8₁, 8₂, 8₃ zunächst einmal eine Schnittkante 7 in dem Abschnitt 9 mit der vorgegebenen Länge L erzeugt wird.

Tatsächlich mag der Abschnitt 9 und folglich die Schnittkante 7 über die Länge L von beispielsweise 50 mm bis 100 mm oder noch mehr verfügen. Nachdem die Lasereinheit 4₁, 5₁ die erste Schnittkante 7 im Längssegment 8₁ erzeugt hat, springt der Laserstrahl 12 zur zweiten Schnittkante 7 und erzeugt diese mit übereinstimmender Länge L, bis nach dem Ausführungsbeispiel die sämtlichen drei Schnittkanten 7 im Längssegment 8₁ und dem dortigen Abschnitt 9 mit der Länge L produziert worden sind. Das heißt, die Strahlablenkeinheit 5 bzw. allgemein die Lasereinheit 4, 5 produziert jeweils parallele Schnittkanten 7 gleicher Länge L im zugehörigen Längssegment 8₁, 8₂ und 8₃. Die Anzahl der Schnittkanten 7 gibt dabei die Anzahl der auf diese Weise produzierten Klebebänder 6 ausgangsseitig vor. Außerdem ist die Auslegung so getroffen, dass die Lasereinheit 4, 5 bzw. die Strahlablenkeinheit 5 im jeweiligen Längssegment 8₁, 8₂ und 8₃ die parallelen Schnittkanten 7 der vorgegebenen Länge L jeweils in der Maschinenrichtung MR aneinander anschließend erzeugt. Dabei muss die Geschwindigkeit der Strahlablenkeinheit 5 wenigstens das Dreifache im Vergleich zur Geschwindigkeit des bandförmigen Trägers 1 betragen.

Um nun insgesamt die streifenförmigen Klebebänder 6 mit einer Länge von mehreren Metern im Beispielfall ausgangsseitig zur Verfügung zu stellen und zu produzieren, ist die Auslegung so getroffen, dass die parallelen Schnittkanten 7 jeweils versatzfrei aneinander anschließen. Das heißt, sobald im Beispielfall die Lasereinheit 4₁, 5₁ im ersten Abschnitt 9 des Längssegmentes 8₁ die dort im Ausführungsbeispiel vorgesehenen und dargestellten drei Schnittkanten 7 mit der Länge L erzeugt hat, sorgt insgesamt der Vorschub des bandförmigen Trägers 1 in der Maschinenrichtung MR dafür, dass anschließend die Schnittkanten 7 im Längssegment 8₁ im daran anschließenden weiteren zweiten Abschnitt 9 produziert werden können. Dabei schließen die jeweils parallelen Schnittkanten 7 versatzfrei aneinander an. Außerdem ist die Auslegung so getroffen, dass die Geschwindigkeit des bandförmigen Trägers 1 und diejenige der Strahlablenkeinheit 5₁ im betrachteten Beispielfall des Längssegmentes 8₁ aneinander angepasst sind. Für die Anpassung sorgt eine zentrale Steuereinheit 13. Dazu erhält die zentrale Steuereinheit 13 Signale eines Sensors 20, mit dessen Hilfe die Bahngeschwindigkeit des bandförmigen textilen Trägers 1 gemessen und an die zentrale Steuereinheit 13 übermittelt wird. Außerdem ist die zentrale Steuereinheit 13 jeweils an die einzelnen Lasereinheiten 4₁, 5₁; 4₂, 5₂ und 4₃, 5₃ angeschlossen, um diese entsprechend anzusteuern, damit mit ihrer Hilfe die Längskanten 7 im zugehörigen Abschnitt 9 der korrespondierenden Längssegmente 8₁, 8₂, 8₃ hergestellt werden können. Nicht ausdrücklich dargestellt ist die weitere Möglichkeit, dass mithilfe der zentralen Steuereinheit 13 in Abhängigkeit der Signale des Sensors 20 ein Antrieb für den textilen Träger 1 zur Einstellung seiner Geschwindigkeit in der Maschinenrichtung MR angesteuert wird.

Anhand der Detaildarstellung in der Figur 4 wird deutlich, dass die Strahlablenkeinheit 5 mit wenigstens zwei Umlenkspiegel 14, 15 ausgerüstet ist. Die beiden Umlenkspiegel 14, 15 lassen sich dabei in zwei zueinander senkrecht stehenden Ebenen verschwenken. Dazu ist jeder Umlenkspiegel 14, 15 mit einem zugehörigen Galvanometer-Scanner 16, 17 ausgerüstet, die ihrerseits mithilfe der zentralen Steuereinheit 13 angesteuert und beaufschlagt werden.

In der Figur 4 erkennt man zusätzlich noch, dass der Laserstrahl 12 auf die Ebene des bandförmigen Trägers 1 fokussiert ist. Zu diesem Zweck ist eine Aufweitoptik 18 realisiert, mit deren Hilfe ein Nachfokussieren des Laserstrahls 12 möglich ist. Dazu verfügt die Aufweitoptik 18 über eine in Richtung des Laserstrahls 12 motorisch verfahrbare Linse 19. Die Linse 19 ist wie die beiden Galvanometer-Scanner 16, 17 ebenfalls an die zentrale Steuereinheit 13 angeschlossen.

Neben einer Änderung der Fokussierung des Laserstrahls 12 mithilfe der Steuereinheit 13 ist diese schließlich noch in der Lage, eine Korrektur der Position des bandförmigen Trägers 1 in der Querrichtung Q vornehmen zu können. Dazu lassen sich beispielsweise einzelne oder sämtliche der Umlenkrollen 10 (sowie gegebenenfalls die Vorratseinheit 2) in ihrer Längsrichtung und damit in der Querrichtung Q mithilfe der Steuereinheit 13 im Bedarfsfall verfahren, um sicherzustellen, dass die einzelnen Schnittkanten 7 tatsächlich versatzfrei von Abschnitt 9 zu Abschnitt 9 aneinander anschließen. Nicht dargestellt ist die Möglichkeit, die Strahlablenkeinheit 5 jeweils mit beispielsweise Wasser zu kühlen, um eine maximale Positionsstabilität der Umlenkspiegel 14, 15 zu erreichen. Ebenfalls nicht wiedergegeben ist die Option, dass die zentrale Steuereinheit 13 an ein übergeordnetes Netzwerk, beispielsweise das Internet, angeschlossen ist, um auf diese Weise eine Fernüberwachung vornehmen zu können bzw. von außen Programme zur Ansteuerung der jeweiligen Lasereinheit 4, 5 einspielen zu können.

## Patentansprüche

1. Verfahren zur Herstellung eines Klebebandes (6), wonach
ein bandförmiger sowie mit einer Klebebeschichtung (3) ausgerüsteter textiler Träger (1) ausgehend von einer Vorratseinheit (2) zugeführt wird, wonach ferner
der bandförmige Träger (1) mithilfe einer Lasereinheit (4, 5) in Längsrichtung zu den einzelnen Klebebändern (6) geschnitten wird, und wonach
mehrere Lasereinheiten (4₁, 5₁; 4₂, 5₂; 4₃, 5₃) vorgesehen sind, die in einzelnen Längssegmenten (8₁, 8₂, 8₃) des bandförmigen Trägers (1) die jeweiligen Klebebänder (6) erzeugen,
**dadurch gekennzeichnet, dass**
eine zentrale Steuereinheit (13) eingesetzt wird, um sämtliche Lasereinheiten (4₁, 5₁; 4₂, 5₂; 4₃, 5₃) hiermit gemeinsam derart ansteuern zu können, dass in jedem Längssegment (8₁, 8₂, 8₃) mehrere Klebebänder (6) mithilfe der zugehörigen Lasereinheit (4₁, 5₁; 4₂, 5₂; 4₃, 5₃) geschnitten werden und dazu
die jeweilige Lasereinheit (4₁, 5₁; 4₂, 5₂; 4₃, 5₃) mit einer Laserquelle (4) sowie einer Strahlablenkeinheit (5) ausgerüstet ist, wobei
die Strahlablenkeinheit (5) den von der Lasereinheit (4) ausgehenden Laserstrahl (12) zur Erzeugung der einzelnen Klebebänder (6) im zugehörigen Längssegment (8₁, 8₂, 8₃) jeweils in Längsrichtung zur Realisierung mehrerer Schnittkanten (7) vorgegebener Länge ablenkt, wobei ferner
die Geschwindigkeit des bandförmigen Trägers (1) und diejenige der Strahlablenkeinheit (5) aneinander angepasst sind und
dem von der Vorratseinheit (2) zugeführten bandförmigen Träger (1) ein Sensor (20) zur Geschwindigkeitsmessung zugeordnet wird, um die Geschwindigkeit des bandförmigen Trägers (1) zu erfassen, und wobei
ein Geschwindigkeitssignal des Sensors (20) von der zentralen Steuereinheit (13) verarbeitet und mit der Geschwindigkeit zur Ansteuerung der Strahlablenkeinheit (5) synchronisiert wird.

2. Verfahren nach Anspruch 1, **dadurch gekennzeichnet, dass** die einzelnen Längssegmente (8₁, 8₂, 8₃) abstandsfrei aneinander anschließen und sich über die gesamte Breite des bandförmigen Trägers (1) erstrecken.

3. Verfahren nach Anspruch 1 oder 2, **dadurch gekennzeichnet, dass** in jedem Längssegment (8₁, 8₂, 8₃) mehrere Klebebänder (6) mithilfe der zugehörigen Lasereinheit (4₁, 5₁; 4₂, 5₂; 4₃, 5₃) hergestellt werden.

4. Verfahren nach einem der Ansprüche 1 bis 3, **dadurch gekennzeichnet, dass** die Klebebänder (6) im jeweiligen Längssegment (8₁, 8₂, 8₃) mit übereinstimmender Breite geschnitten werden.

5. Verfahren nach einem der Ansprüche 1 bis 4, **dadurch gekennzeichnet, dass** der bandförmige Träger (1) in Querrichtung (Q) in die Längssegmente (8₁, 8₂, 8₃) jeweils gleicher Breite unterteilt wird.

6. Verfahren nach Ansprüche 1 bis 5, **dadurch gekennzeichnet, dass** die Strahlablenkeinheit (5) jeweils parallele Schnittkanten (7) gleicher Länge (L) im Längssegment (8₁, 8₂, 8₃) erzeugt.

7. Verfahren nach Anspruch 6, **dadurch gekennzeichnet, dass** die Anzahl der Schnittkanten (7) die Anzahl der Klebebänder (6) im Längssegment (8₁, 8₂, 8₃) vorgibt.

8. Verfahren nach einem der Ansprüche 1 bis 7, **dadurch gekennzeichnet, dass** die Strahlablenkeinheit (5) im jeweiligen Längssegment (8₁, 8₂, 8₃) die parallelen Schnittkanten (7) vorgegebener Länge (L) jeweils in Maschinenrichtung (MR) aneinander anschließend erzeugt.

9. Verfahren nach Anspruch 8, **dadurch gekennzeichnet, dass** die parallelen Schnittkanten (7) versatzfrei aneinander anschließen.

10. Vorrichtung zur Herstellung von Klebebändern (6), insbesondere zur Durchführung des Verfahrens nach einem der Ansprüche 1 bis 9,
mit einer Vorratseinheit (2) zur Zuführung eines bandförmigen sowie mit einer Klebebeschichtung (3) ausgerüsteten textilen Trägers (1), und
mit einer Lasereinheit (4, 5) zum Schneiden des bandförmigen Trägers (1) in Längsrichtung zu den einzelnen Klebebändern (6), wobei
mehrere Lasereinheiten (4₁, 5₁; 4₂, 5₂; 4₃, 5₃) vorgesehen sind, die in einzelnen Längssegmenten (8₁, 8₂, 8₃) des bandförmigen Trägers (1) die jeweiligen Klebebänder (6) erzeugen,
**dadurch gekennzeichnet, dass**
eine zentrale Steuereinheit (13) vorgesehen ist, um sämtliche Lasereinheiten (4₁, 5₁; 4₂, 5₂; 4₃, 5₃) hiermit gemeinsam derart ansteuern zu können, dass in jedem Längssegment (8₁, 8₂, 8₃) mehrere Klebebänder (6) mithilfe der zugehörigen Lasereinheit (4₁, 5₁; 4₂, 5₂; 4₃, 5₃) geschnitten werden und dazu
die jeweilige Lasereinheit (4₁, 5₁; 4₂, 5₂; 4₃, 5₃) mit einer Laserquelle (4) sowie einer Strahlablenkeinheit (5) ausgerüstet ist, wobei
die Strahlablenkeinheit (5) den von der Lasereinheit (4) ausgehenden Laserstrahl (12) zur Erzeugung der einzelnen Klebebänder (6) im zugehörigen Längssegment (8₁, 8₂, 8₃) jeweils in Längsrichtung zur Realisierung mehrerer Schnittkanten (7) vorgegebener Länge ablenkt, wobei ferner
die Geschwindigkeit des bandförmigen Trägers (1) und diejenige der Strahlablenkeinheit (5) aneinander angepasst sind und
dem von der Vorratseinheit (2) zugeführten bandförmigen Träger (1) ein Sensor (20) zur Geschwindigkeitsmessung zugeordnet ist, um die Geschwindigkeit des bandförmigen Trägers (1) zu erfassen, und wobei
ein Geschwindigkeitssignal des Sensors (20) von der zentralen Steuereinheit (13) verarbeitet und mit der Geschwindigkeit zur Ansteuerung der Strahlablenkeinheit (5) synchronisiert wird.

11. Vorrichtung nach Anspruch 10, **dadurch gekennzeichnet, dass** die Strahlablenkeinheit (5) wenigstens zwei Umlenkspiegel (14, 15) aufweist, die in zwei zueinander senkrecht stehenden Ebenen verschwenkbar sind.

12. Vorrichtung nach Anspruch 11, **dadurch gekennzeichnet, dass** die beiden Umlenkspiegel (14, 15) zum Verschwenken jeweils mit einem Galvanometer-Scanner (16, 17) ausgerüstet sind.

## Claims

1. Method for producing an adhesive tape (6), according to which
a web-like textile carrier (1) equipped with an adhesive coating (3) is fed from a storage unit (2), further according to which
the web-like carrier (1) is cut longitudinally into the individual adhesive tapes (6) using a laser unit (4, 5), and according to which
a plurality of laser units (4₁, 5₁; 4₂, 5₂; 4₃, 5₃) are provided, which create the respective adhesive tapes (6) in individual longitudinal segments (8₁, 8₂, 8₃) of the web-like carrier (1),
**characterized in that**
a central control unit (13) is used to enable all of the laser units (4₁, 5₁; 4₂, 5₂; 4₃, 5₃) to be actuated therewith in such a way that multiple adhesive tapes (6) are cut in each longitudinal segment (8₁, 8₂, 8₃) with the aid of the associated laser unit (4₁, 5₁; 4₂, 5₂; 4₃, 5₃), and for this purpose
the respective laser unit (4₁, 5₁; 4₂, 5₂; 4₃, 5₃) is equipped with a laser source (4) and a beam deflection unit (5), wherein
the beam deflection unit (5) deflects the laser beam (12) emitted by the laser unit (4) for producing the individual adhesive tapes (6) in the associated longitudinal segment (8₁, 8₂, 8₃), each in the longitudinal direction to create multiple cut edges (7) of predefined length, wherein further
the speed of the web-like carrier (1) and that of the beam deflection unit (5) are matched with one another, and
a sensor (20) for speed measurement is assigned to the web-like carrier (1) that is fed from the storage unit (2) in order to detect the speed of the web-like carrier (1), and wherein
a speed signal from the sensor (20) is processed by the central control unit (13) and synchronised with the speed in order to actuate the beam deflection unit (5).

2. Method according to Claim 1, **characterized in that** the individual longitudinal segments (8₁, 8₂, 8₃) adjoin one another without any spacing and extend over the entire width of the web-like carrier (1).

3. Method according to Claim 1 or 2, **characterized in that** a plurality of adhesive tapes (6) are produced in each longitudinal segment (8₁, 8₂, 8₃) with the aid of the associated laser unit (4₁, 5₁; 4₂, 5₂; 4₃, 5₃) .

4. Method according to any one of Claims 1 to 3, **characterized in that** the adhesive tapes (6) are cut with matching width in the respective longitudinal segment (8₁, 8₂, 8₃) .

5. Method according to any one of Claims 1 to 4, **characterized in that** the web-like carrier (1) is subdivided in the transverse direction (Q) into the longitudinal segments (8₁, 8₂, 8₃), each having the same width.

6. Method according to any one of Claims 1 to 5, **characterized in that** the beam deflection unit (5) produces parallel cut edges (7) of the same length (L) in each case in the longitudinal segment (8₁, 8₂, 8₃) .

7. Method according to Claim 6, **characterized in that** the number of cut edges (7) determines the number of adhesive tapes (6) in the longitudinal segment (8₁, 8₂, 8₃).

8. Method according to any one of Claims 1 to 7, **characterized in that** the beam deflection unit (5) creates the parallel cut edges (7) of predetermined length (L) adjacent to each other in the respective longitudinal segment (8₁, 8₂, 8₃), each in the machine direction (MR).

9. Method according to Claim 8, **characterized in that** the parallel cut edges (7) adjoin each another without offset.

10. Apparatus for producing adhesive tapes (6), in particular for carrying out the method according to any one of Claims 1 to 9,
with a storage unit (2) for feeding a web-like textile carrier (1) equipped with an adhesive coating (3), and
with a laser unit (4, 5) for cutting the web-like carrier (1) in the longitudinal direction to form the individual adhesive strips (6), wherein
several laser units (4₁, 5₁; 4₂, 5₂; 4₃, 5₃) are provided, which create the respective adhesive tapes (6) in individual longitudinal segments (8₁, 8₂, 8₃) of the web-like carrier (1),
**characterized in that**
a central control unit (13) is provided to enable all of the laser units (4₁, 5₁; 4₂, 5₂; 4₃, 5₃) to be actuated therewith together in such a way that multiple adhesive tapes (6) are cut in each longitudinal segment (8₁, 8₂, 8₃) with the aid of the associated laser unit (4₁, 5₁; 4₂, 5₂; 4₃, 5₃), and for this purpose
the respective laser unit (4₁, 5₁; 4₂, 5₂; 4₃, 5₃) is equipped with a laser source (4) and a beam deflection unit (5), wherein
the beam deflection unit (5) deflects the laser beam (12) emitted by the laser unit (4) for producing the individual adhesive tapes (6) in the associated longitudinal segment (8₁, 8₂, 8₃), each in the longitudinal direction to create multiple cut edges (7) of predefined length, wherein further
the speed of the web-like carrier (1) and that of the beam deflection unit (5) are matched with one another, and
a sensor (20) for speed measurement is assigned to the web-like carrier (1) that is fed from the storage unit (2) in order to detect the speed of the web-like carrier (1), and wherein
a speed signal from the sensor (20) is processed by the central control unit (13) and synchronised with the speed in order to actuate the beam deflection unit (5).

11. Apparatus according to Claim 10, **characterized in that** the beam deflection unit (5) has at least two deflection mirrors (14, 15) which can be swivelled in two mutually perpendicular planes.

12. Apparatus according to Claim 11, **characterized in that** the two deflection mirrors (14, 15) are each equipped with a galvanometer scanner (16, 17) for swivelling.

## Revendications

1. Procédé de fabrication d'une bande adhésive (6),
un support textile (1) en forme de bande et doté d'un revêtement adhésif (3) étant acheminé venant d'une unité de réserve (2),
le support en forme de bande (1) étant coupé à l'aide d'une unité laser (4, 5) dans la direction longitudinale en bandes adhésives individuelles (6), et
plusieurs unités laser (4₁, 5₁, 4₂, 5₂, 4₃, 5₃) étant prévues, qui produisent les bandes adhésives respectives (6) en segments longitudinaux (8₁, 8₂, 8₃) du support en forme de bande (1),
**caractérisé en ce qu'**
une unité de commande centrale (13) est incorporée pour pouvoir commander de ce fait en commun toutes les unités laser (4₁, 5₁, 4₂, 5₂, 4₃, 5₃) de telle manière que dans chaque segment longitudinal (8₁, 8₂, 8₃) plusieurs bandes adhésives (6) sont coupées à l'aide de l'unité laser correspondante (4₁, 5₁, 4₂, 5₂, 4₃, 5₃) et
l'unité laser respective (4₁, 5₁, 4₂, 5₂, 4₃, 5₃) est dotée à cet effet d'une source laser (4) ainsi que d'une unité de déflexion de faisceau (5), sachant que
l'unité de déflexion de faisceau (5) dévie le faisceau laser (12) partant de l'unité laser (4) pour produire les bandes adhésives individuelles (6) dans le segment longitudinal correspondant (8₁, 8₂, 8₃) respectivement en direction longitudinale pour réaliser plusieurs bords de coupe (7) de longueur prédéfinie, sachant en plus
que la vitesse du support en forme de bande (1) et celle de l'unité de déflexion de faisceau (5) sont adaptées l'une à l'autre, et
qu'un capteur (20) pour la mesure de la vitesse est attribué au support en forme de bande (1) acheminé depuis l'unité de réserve (2) pour saisir la vitesse du support en forme de bande (1), et sachant qu'
un signal de vitesse du capteur (20) est traité par l'unité de commande centrale (13) et est synchronisé avec la vitesse pour la commande de l'unité de déflexion de faisceau (5).

2. Procédé selon la revendication 1, **caractérisé en ce que** les segments longitudinaux (8₁, 8₂, 8₃) individuels se raccordent l'un à l'autre sans espacement et s'étendent sur toute la largeur du support en forme de bande (1).

3. Procédé selon la revendication 1 ou 2, **caractérisé en ce que** dans chaque segment longitudinal (8₁, 8₂, 8₃) sont fabriquées plusieurs bandes adhésives (6) à l'aide de l'unité laser correspondante (4₁, 5₁, 4₂, 5₂, 4₃, 5₃).

4. Procédé selon l'une quelconque des revendications 1 à 3, **caractérisé en ce que** les bandes adhésives (6) sont coupées dans le segment longitudinal (8₁, 8₂, 8₃) avec la largeur correspondante.

5. Procédé selon l'une quelconque des revendications 1 à 4, **caractérisé en ce que** le support en forme de bande (1) est subdivisé en direction transversale (Q) en segments longitudinaux (8₁, 8₂, 8₃) de largeur respectivement identique.

6. Procédé selon l'une quelconque des revendications 1 à 5, **caractérisé en ce que** l'unité de déflexion de faisceau (5) produit des bords de coupe (7) respectivement parallèles de longueur identique (L) dans un segment longitudinal (8₁, 8₂, 8₃) .

7. Procédé selon la revendication 6, **caractérisé en ce que** le nombre de bords de coupe (7) définit préalablement le nombre des bandes adhésives (6) dans le segment longitudinal (8₁, 8₂, 8₃) .

8. Procédé selon l'une quelconque des revendications 1 à 7, **caractérisé en ce que** l'unité de déflexion de faisceau (5) produit respectivement dans le segment longitudinal (8₁, 8₂, 8₃) respectif les bords de coupe parallèles (7) de longueur prédéfinie (L) se raccordant l'un à l'autre dans le sens de la machine (MR).

9. Procédé selon la revendication 8, **caractérisé en ce que** les bords de coupe parallèles (7) se raccordent l'un à l'autre sans décalage.

10. Dispositif de fabrication de bandes adhésives (6), en particulier pour exécuter le procédé selon l'une quelconque des revendications 1 à 9,
avec une unité de réserve (2) pour alimenter en support (1) textile en forme de bande et doté d'un revêtement adhésif (3), et
avec une unité laser (4, 5) pour découper le support en forme de bande (1) dans la direction longitudinale en bandes adhésives individuelles (6), sachant que
plusieurs unités laser (4₁, 5₁, 4₂, 5₂, 4₃, 5₃) sont prévues, qui produisent les bandes adhésives (6) respectives en segments longitudinaux (8₁, 8₂, 8₃) du support en forme de bande (1),
**caractérisé en ce que**
une unité de commande centrale (13) est prévue pour pouvoir commander de ce fait en commun toutes les unités laser (4₁, 5₁, 4₂, 5₂, 4₃, 5₃) de telle manière que dans chaque segment longitudinal (8₁, 8₂, 8₃) plusieurs bandes adhésives (6) sont coupées à l'aide de l'unité laser correspondante (4₁, 5₁, 4₂, 5₂, 4₃, 5₃) et
l'unité laser respective (4₁, 5₁, 4₂, 5₂, 4₃, 5₃) est dotée à cet effet d'une source laser (4) ainsi que d'une unité de déflexion de faisceau (5), sachant que
l'unité de déflexion de faisceau (5) dévie le faisceau laser (12) partant de l'unité laser (4) pour produire les bandes adhésives individuelles (6) dans le segment longitudinal (8₁, 8₂, 8₃) correspondant respectivement en direction longitudinale pour réaliser plusieurs bords de coupe (7) de longueur prédéfinie, sachant en plus
que la vitesse du support en forme de bande (1) et celle de l'unité de déflexion de faisceau (5) sont adaptées l'une à l'autre, et
qu'un capteur (20) pour la mesure de la vitesse est attribué au support en forme de bande (1) acheminé depuis l'unité de réserve (2) pour saisir la vitesse du support en forme de bande (1), et sachant qu'
un signal de vitesse du capteur (20) est traité par l'unité de commande centrale (13) et est synchronisé avec la vitesse pour la commande de l'unité de déflexion de faisceau (5).

11. Dispositif selon la revendication 10, **caractérisé en ce que** l'unité de déflexion de faisceau (5) comporte au moins deux miroirs de réflexion (14, 15), qui peuvent être pivotés dans deux plans perpendiculaires l'un à l'autre.

12. Dispositif selon la revendication 11, **caractérisé en ce que** les deux miroirs de réflexion (14, 15) sont dotés respectivement d'un analyseur galvanométrique (16, 17) pour pivoter.
